(19) **Europäisches Patentamt European Patent Office Office européen des brevets**

(11) **EP 4 319 468 A1**

(12) **EUROPEAN PATENT APPLICATION**
published in accordance with Art. 153(4) EPC

(43) Date of publication:
**07.02.2024 Bulletin 2024/06**

(21) Application number: **22778541.7**

(22) Date of filing: **14.03.2022**

(51) International Patent Classification (IPC):
**H04W 76/28** (2018.01)     **H04W 74/08** (2024.01)

(52) Cooperative Patent Classification (CPC):
**H04W 74/08; H04W 76/28;** Y02D 30/70

(86) International application number:
**PCT/CN2022/080642**

(87) International publication number:
**WO 2022/206357 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2021 CN 202110362314**

(71) Applicant: **Datang Mobile Communications Equipment Co., Ltd.**
**Beijing 100085 (CN)**

(72) Inventors:
• **TIAN, Yan**
  **Beijing 100085 (CN)**
• **LI, Shupeng**
  **Beijing 100085 (CN)**
• **MA, Teng**
  **Beijing 100085 (CN)**
• **REN, Xiaotao**
  **Beijing 100085 (CN)**

(74) Representative: **Studio Torta S.p.A.**
**Viale Antonio Silvani, 6**
**40122 Bologna (IT)**

(54) **RESOURCE SENSING METHOD AND APPARATUS, AND STORAGE MEDIUM**

(57)     Provided in the embodiments of the present disclosure are a resource sensing method and apparatus, and a storage medium, the method comprising: determining whether a current sensing opportunity entirely overlaps the duration of a current discontinuous reception DRX cycle; and, if the current sensing opportunity does not entirely overlap the duration of the current DRX cycle, then performing resource sensing during a target time period within the duration of the next DRX cycle. In the resource sensing method and apparatus and storage medium provided in the embodiments of the present disclosure, when a sensing opportunity of partial sensing does not entirely overlap the duration of a current DRX cycle, then a period of continuous sensing is performed within the duration of the next DRX cycle, increasing the reliability of data transmission.

Determining whether a current sensing occasion fully overlaps with an ON duration of a current discontinuous reception (DRX) cycle — 301

When the current sensing occasion does not fully overlap with the ON duration of the current DRX cycle, performing resource sensing within a target time period within the ON duration of a next DRX cycle — 302

FIG. 3

## Description

## CROSS-REFERENCE TO RELATED APPLICATION

The present application claims priority to Chinese patent application No. 202110362314.6 filed on April 02, 2021, entitled "Resource Sensing Method and Apparatus, and Storage Medium", which is hereby incorporated by reference in its entirety.

## FIELD

The present application relates to the field of communication, in particular to resource sensing methods and apparatuses, and a storage medium.

## BACKGROUND

In a 5th generation (5G) vehicle-to-everything (V2X) sidelink communication system, in a case where a terminal/user equipment (UE) is configured with both discontinuous reception (DRX) and partial sensing, it is required to use partial sensing to exclude resource collision from selected candidate resources for transmission by the UE.

However, if the sensing occasion for partial sensing is within the DRX OFF duration, UE is unable to receive sidelink control information (SCI) and unable to sense the resource occupation within the DRX OFF duration, thereby increasing the probability of resource collision and reducing the reliability of data transmission.

## SUMMARY

Embodiments of the present application provide resource sensing methods and apparatuses, and a storage medium, which solve the problem of low reliability for data transmission in the related art.

An embodiment of the present application provides a resource sensing method, including:

determining whether a current sensing occasion fully overlaps with an ON duration of a current discontinuous reception (DRX) cycle; and
performing, when the current sensing occasion does not fully overlap with the ON duration of the current DRX cycle, resource sensing within a target time period within an ON duration of a next DRX cycle.

In an embodiment, the current sensing occasion does not fully overlap with the ON duration of the current DRX cycle includes:
a part of the current sensing occasion overlaps with the ON duration of the current DRX cycle, and the remaining part of the current sensing occasion overlaps with an OFF duration of the DRX cycle.

In an embodiment, the current sensing occasion does not fully overlap with the ON duration of the current DRX cycle includes:
the current sensing occasion fully overlaps with the OFF duration of the current DRX cycle.

In an embodiment, the current sensing occasion does not fully overlap with the ON duration of the current DRX cycle includes:
a part of the current sensing occasion overlaps with the OFF duration of the current DRX cycle, and a remaining part of the current sensing occasion overlaps with the ON duration of the next DRX cycle.

In an embodiment, before the determining whether the current sensing occasion fully overlaps with the ON duration of the current DRX cycle, the method further includes:

receiving a first configuration message transmitted from a network-side device, where the first configuration message includes a start location of the target time period; or,
the start location of the target time period is pre-configured ; or
before the performing the resource sensing within the target time period within the ON duration of the next DRX cycle, the method further includes:
determining a start location of the target time period.

In an embodiment, the start location of the target time period is same as a start location of the ON duration of the next DRX cycle.

In an embodiment, the start location of the target time period is a fixed target position within the ON duration of the next DRX cycle.

In an embodiment, for periodic services, a length of the target time period is not less than a maximum sensing cycle in a case that service latency is ensured.

In an embodiment, for periodic services, an end position of the target time period does not exceed an end position of the ON duration of the next DRX cycle in a case that service latency is not ensured.

In an embodiment, for aperiodic services, an end position of the target time period does not exceed an end position of the ON duration of the next DRX cycle.

An embodiment of the present application provides a resource sensing method, including:
transmitting a first configuration message to a target user equipment (UE), where the first configuration message includes a start location of a target time period, the target time period is a time period within which the target UE performs, when a current sensing occasion does not fully overlap with an ON duration of a current discontinuous reception (DRX) cycle, resource sensing within an ON duration of a next DRX cycle.

In an embodiment, the current sensing occasion does not fully overlap with the ON duration of the current DRX cycle includes:
a part of the current sensing occasion overlaps with the ON duration of the current DRX cycle, and a remaining part of the current sensing occasion overlaps with an OFF duration of the DRX cycle.

In an embodiment, the current sensing occasion does not fully overlap with the ON duration of the current DRX cycle includes:

the current sensing occasion fully overlaps with the OFF duration of the current DRX cycle.

In an embodiment, the current sensing occasion does not fully overlap with the ON duration of the current DRX cycle includes:

a part of the current sensing occasion overlaps with the OFF duration of the current DRX cycle, and a remaining part of the current sensing occasion overlaps with the ON duration of the next DRX cycle.

In an embodiment, the start location of the target time period is same as a start location of the ON duration of the next DRX cycle.

In an embodiment, the start location of the target time period is a fixed target position within the ON duration of the next DRX cycle.

In an embodiment, for periodic services, a length of the target time period is not less than a maximum sensing cycle in a case that service latency is ensured.

In an embodiment, for periodic services, an end position of the target time period does not exceed an end position of the ON duration of the next DRX cycle in a case that service latency is not ensured.

In an embodiment, for aperiodic services, an end position of the target time period does not exceed an end position of the ON duration of the next DRX cycle.

An embodiment of the present application provides a user equipment (UE), including a memory, a transceiver, and a processor;

the memory is used to store computer programs; the transceiver is used to transmit and receive data under the control of the processor; the processor is used to read computer programs in the memory and perform following operations:

determining whether a current sensing occasion fully overlaps with an ON duration of a current discontinuous reception (DRX) cycle; and
performing, when the current sensing occasion does not fully overlap with the ON duration of the current DRX cycle, resource sensing within a target time period within an ON duration of a next DRX cycle.

In an embodiment, the current sensing occasion does not fully overlap with the ON duration of the current DRX cycle includes:

a part of the current sensing occasion overlaps with the ON duration of the current DRX cycle, and the remaining part of the current sensing occasion overlaps with an OFF duration of the DRX cycle.

In an embodiment, the current sensing occasion does not fully overlap with the ON duration of the current DRX cycle includes:

the current sensing occasion fully overlaps with the OFF duration of the current DRX cycle.

In an embodiment, the current sensing occasion does not fully overlap with the ON duration of the current DRX cycle includes:

a part of the current sensing occasion overlaps with the OFF duration of the current DRX cycle, and a remaining part of the current sensing occasion overlaps with the ON duration of the next DRX cycle.

In an embodiment, before the determining whether the current sensing occasion fully overlaps with the ON duration of the current DRX cycle, the method further includes:

receiving a first configuration message transmitted from a network-side device, where the first configuration message includes a start location of the target time period; or,
the start location of the target time period is preconfigured ; or
before the performing the resource sensing within the target time period within the ON duration of the next DRX cycle, the method further includes:
determining a start location of the target time period.

In an embodiment, the start location of the target time period is same as a start location of the ON duration of the next DRX cycle.

In an embodiment, the start location of the target time period is a fixed target position within the ON duration of the next DRX cycle.

In an embodiment, for periodic services, a length of the target time period is not less than a maximum sensing cycle in a case that service latency is ensured.

In an embodiment, for periodic services, an end position of the target time period does not exceed an end position of the ON duration of the next DRX cycle in a case that service latency is not ensured.

In an embodiment, for aperiodic services, an end position of the target time period does not exceed an end position of the ON duration of the next DRX cycle.

An embodiment of the present application provides a network-side device, including a memory, a transceiver, and a processor;

the memory is used to store computer programs; the transceiver is used to transmit and receive data under the control of the processor; the processor is used to read computer programs in the memory and perform following operations:

transmitting a first configuration message to a target user equipment (UE), where the first configuration message includes a start location of a target time period, the target time period is a time period within which the target UE performs, when a current sensing occasion does not fully overlap with an ON duration of a current discontinuous reception (DRX) cycle, resource sensing within an ON duration of a next DRX cycle.

In an embodiment, the current sensing occasion does not fully overlap with the ON duration of the current DRX cycle includes:

a part of the current sensing occasion overlaps with the ON duration of the current DRX cycle, and a remaining part of the current sensing occasion overlaps with an OFF duration of the DRX cycle.

In an embodiment, the current sensing occasion does not fully overlap with the ON duration of the current DRX cycle includes:

the current sensing occasion fully overlaps with the OFF duration of the current DRX cycle.

In an embodiment, the current sensing occasion does not fully overlap with the ON duration of the current DRX cycle includes:

a part of the current sensing occasion overlaps with the OFF duration of the current DRX cycle, and a remaining part of the current sensing occasion overlaps with the ON duration of the next DRX cycle.

In an embodiment, the start location of the target time period is same as a start location of the ON duration of the next DRX cycle.

In an embodiment, the start location of the target time period is a fixed target position within the ON duration of the next DRX cycle.

In an embodiment, for periodic services, a length of the target time period is not less than a maximum sensing cycle in a case that service latency is ensured.

In an embodiment, for periodic services, an end position of the target time period does not exceed an end position of the ON duration of the next DRX cycle in a case that service latency is not ensured.

In an embodiment, for aperiodic services, an end position of the target time period does not exceed an end position of the ON duration of the next DRX cycle.

An embodiment of the present application provides a resource sensing apparatus, including:

a first determining module, used to determine whether a current sensing occasion fully overlaps with an ON duration of a current discontinuous reception DRX cycle;

a sensing module, used to perform, when the current sensing occasion does not fully overlap with the ON duration of the current DRX cycle, resource sensing in an ON duration in a target time period of a next DRX cycle.

In an embodiment, the current sensing occasion does not fully overlap with the ON duration of the current DRX cycle includes:

a part of the current sensing occasion overlaps with the ON duration of the current DRX cycle, and a remaining part of the current sensing occasion overlaps with an OFF duration of the DRX cycle.

In an embodiment, the current sensing occasion does not fully overlap with the ON duration of the current DRX cycle includes:

the current sensing occasion fully overlaps with the OFF duration of the current DRX cycle.

In an embodiment, the current sensing occasion does not fully overlap with the ON duration of the current DRX cycle includes:

a part of the current sensing occasion overlaps with the OFF duration of the current DRX cycle, and a remaining part of the current sensing occasion overlaps with the ON duration of the next DRX cycle.

In an embodiment of the present application, the apparatus further includes a first receiving module;

where the first receiving module is used to receive a first configuration message transmitted from a network-side device before the determine whether the current sensing occasion fully overlaps with the ON duration of the discontinuous reception DRX cycle; the first configuration message includes a start location of the target time period; or, the start location of the target time period is pre-configured ; or the apparatus further includes a second determining module; the second determining module is used to determine the start location of the target time period before the perform the resource sensing within the target time period within the ON duration of the next DRX cycle.

In an embodiment, the start location of the target time period is same as a start location of the ON duration of the next DRX cycle.

In an embodiment, the start location of the target time period is a fixed target position within the ON duration of the next DRX cycle.

In an embodiment, for periodic services, a length of the target time period is not less than a maximum sensing cycle in a case that service latency is ensured.

In an embodiment, for periodic services, an end position of the target time period does not exceed an end position of the ON duration of the next DRX cycle in a case that service latency is not ensured.

In an embodiment, for aperiodic services, an end position of the target time period does not exceed an end position of the ON duration of the next DRX cycle.

An embodiment of the present application provides a resource sensing apparatus, including:

a first transmitting module, used to transmit a first configuration message to a target user equipment; the first configuration message includes a start location of a target time period; the target time period is a time period within which the target user equipment (UE) performs, when a current sensing occasion does not fully overlap with an ON duration of a current discontinuous reception (DRX) cycle, resource sensing within an ON duration of a next DRX cycle.

In an embodiment, the current sensing occasion does not fully overlap with the ON duration of the current DRX cycle includes:

a part of the current sensing occasion overlaps with the ON duration of the current DRX cycle, and the remaining part of the current sensing occasion overlaps with an OFF duration of the DRX cycle.

In an embodiment, the current sensing occasion does not fully overlap with the ON duration of the current DRX cycle includes:

the current sensing occasion fully overlaps with the OFF duration of the current DRX cycle.

In an embodiment, the current sensing occasion does not fully overlap with the ON duration of the current DRX cycle includes:

a part of the current sensing occasion overlaps with the OFF duration of the current DRX cycle, and a remaining part of the current sensing occasion overlaps with the ON duration of the next DRX cycle.

In an embodiment, the start location of the target time period is same as a start location of the ON duration of the next DRX cycle.

In an embodiment, the start location of the target time period is a fixed target position within the ON duration of the next DRX cycle.

In an embodiment, for periodic services, a length of the target time period is not less than a maximum sensing cycle in a case that service latency is ensured.

In an embodiment, for periodic services, an end position of the target time period does not exceed an end position of the ON duration of the next DRX cycle in a case that service latency is not ensured.

In an embodiment, for aperiodic services, an end position of the target time period does not exceed an end position of the ON duration of the next DRX cycle.

An embodiment of the present application further provides a processor-readable storage medium storing a computer program, the computer program, when executed by a processor, causes the processor to perform the steps of the resource sensing method described above.

In the resource sensing method and apparatus, and the storage medium according to embodiments of the present application, when a sensing occasion of partial sensing does not fully overlap with the ON duration of a DRX cycle, continuous sensing is performed for a period of time within the ON duration of the next DRX cycle, thereby increasing the reliability of data transmission.

## BRIEF DESCRIPTION OF THE DRAWINGS

In order to clearly illustrate the solutions of the embodiments according to the present application or the related art, the accompanying drawings used in the description of the embodiments or the related art are briefly introduced below. It should be noted that the accompanying drawings in the following description are some embodiments of the present application. For those ordinarily skilled in the art, other accompanying drawings may be obtained based on these drawings without creative effort.

FIG. 1 is a schematic diagram of a resource selection method for partial sensing;

FIG. 2 is a schematic diagram of a discontinuous reception (DRX) cycle;

FIG. 3 is a first schematic flowchart of a resource sensing method according to an embodiment of the present application;

FIG. 4 is a schematic diagram of a relationship between a current sensing occasion and a current DRX cycle according to an embodiment of the present application;

FIG. 5 is a first schematic diagram of a relationship between a DRX cycle and a partial sensing window size according to an embodiment of the present application;

FIG. 6 is a second schematic diagram of the relationship between the DRX cycle and the partial sensing window size according to an embodiment of the present application;

FIG. 7 is a third schematic diagram of the relationship between the DRX cycle and the partial sensing window size according to an embodiment of the present application;

FIG. 8 is a fourth schematic diagram of the relationship between the DRX cycle and the partial sensing window size according to an embodiment of the present application;

FIG. 9 is a second schematic flowchart of a resource sensing method according to an embodiment of the present application;

FIG. 10 is a schematic structural diagram of a user equipment (UE) according to an embodiment of the present application;

FIG. 11 is a schematic structural diagram of a network-side device according to an embodiment of the present application;

FIG. 12 is a first schematic structural diagram of a resource sensing apparatus according to an embodiment of the present application; and

FIG. 13 is a second schematic structural diagram of a resource sensing apparatus according to an embodiment of the present application.

## DETAILED DESCRIPTION

A 5G vehicle to everything (V2X) mode 2 (Mode 2) utilizes distributed resource scheduling. Due to the lack of unified scheduling from a base station, it is required for a user equipment (UE) to determine the resource occupation of other UEs through a sensing mechanism and select resources based on the sensing result. Compared to a completely random resource selection mechanism, the sensing mechanism may improve resource utilization, reduce collision probability, and enhance system performance.

In a sensing method for resource occupation, a sensing duration should be firstly determined. In LTE-V2X, since the transmission cycle of V2X services may vary from 100 milliseconds (ms) to 1000 ms, the sensing duration should be 1000 ms if the UE needs to sense all resource occupation.

A very important consideration in the resource selection method for pedestrian-user equipment (P-UE) is power consumption of P-UE. An important prerequisite is that P-UE does not need to receive data transmitted from vehicle-user equipment (V-UE), and P-UE only transmits data. UE senses resources reserved by other UEs through a partial sensing mechanism within a resource sensing window, excludes collision resources, and determines available candidate resources within a resource selection window.

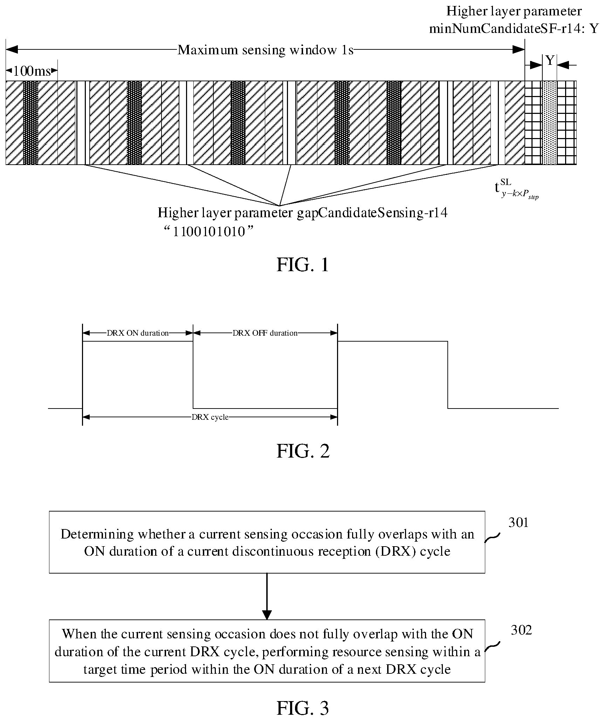

FIG. 1 is a schematic diagram of a resource selection method for partial sensing. As shown in FIG. 1, P-UE determines a minimum number of Y candidate subframes based on a higher layer parameter minNum-CAndiateSF-r14 configuration, and determines the location of Y subframes within the resource selection window by the P-UE. It is determined that whether a current subframe $t_y^{SL}$ is available by monitoring the resource occupation result on a subframe $t_{y-k\times P_{step}}^{SL}$. The set of k values is configured through a higher layer parameter gapCandidateSensing-rl4, and k corresponds to the position where the k-th bit of the higher layer parameter gapCandidateSensing-r14 is 1.

In discontinuous reception (DRX) systems, UE receives data at only part of the time, not all of the time. However, monitoring data reception by the UE at all of the time may significantly increase the power consumption of UE. With DRX, UE monitors discontinuously, thereby saving power.

FIG. 2 is a schematic diagram of a DRX cycle. As shown in FIG. 2, within a DRX cycle, UE monitors and receives data within a DRX ON duration, and the ON duration of the DRX cycle is DRX_on Duration Timer. UE stops monitoring within the DRX OFF duration to save power consumption and the OFF duration of the DRX cycle is DRX_Inactivity Timer. For a transmit-user equipment (TxUE) and a receive user equipment (RxUE) configured with DRX, the DRX configuration of TxUE and RxUE should be consistent, that is, the DRX ON duration of TxUE should be aligned with the DRX ON duration of RxUE.

In the 5G V2X Mode 2 system, neither saving power through DRX is considered and nor a partial sensing mechanism is introduced for the receiving configuration of UE. However, if UE uses DRX to save power on the reception, and UE allocates resources through partial sensing, a sensing occasion of partial sensing may be within DRX OFF duration, resulting in the inability to receive sidelink control information (SCI) and perform a sensing operation for the UE. Due to the lack of monitoring of candidate resources, it may be impossible to sense the resource occupation within the DRX OFF duration, thereby resulting in resource collisions between candidate resources and a decrease in the reliability of data transmission.

The sensing occasion in the embodiments of the present application is a time period or a time window, within which UE determines the resource occupation of other UEs by receiving the SCI.

The embodiments of the present application provide resource sensing methods and apparatuses, and a storage medium. To avoid a situation that the sensing occasion of partial sensing is within the DRX OFF duration, causing that the UE is unable to receive SCI within the sensing occasion and monitor the resource occupation at the location due to the DRX configuration, which may result in resource collisions, when the sensing occasion of partial sensing is within the DRX OFF duration, continuous sensing over a period of time may be performed in the subsequent DRX ON duration. For periodic service transmission, the problem of unsensed resource collision may be avoided by adjusting a duration of a continuous sensing. For aperiodic service transmission, a sensing range may be increased and the probability of resource collision may be reduced through continuous sensing for a period of time.

To make the objectives, solutions, and advantages of the embodiments of the present application clearer, the following provides a clear and complete description of the solution in the embodiments of the present application in conjunction with the accompanying drawings. It should be noted that the described embodiments are only a part of the embodiments of the present application, not all of them. Based on the embodiments in the present application, all other embodiments obtained by those ordinarily skilled in the art without creative labor fall within the scope of protection in the application.

FIG. 3 is a first schematic flowchart of a resource sensing method according to an embodiment of the present application. As shown in FIG. 3, the resource sensing method according to the embodiment of the present application may be performed by a terminal/user equipment (UE). The method includes:

Step 301: determining whether a current sensing occasion fully overlaps with an ON duration of a current discontinuous reception (DRX) cycle.

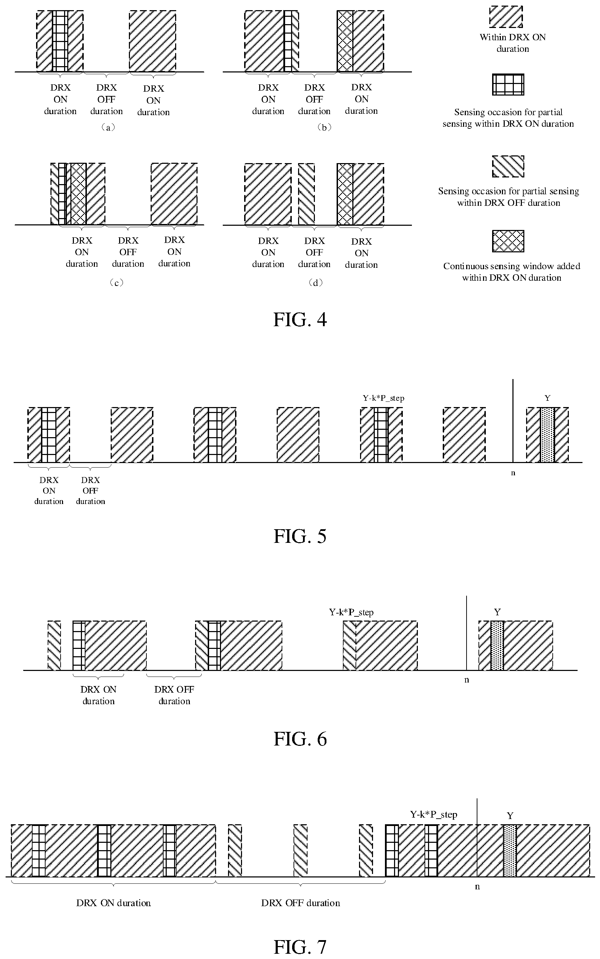

FIG. 4 is a schematic diagram of a relationship between the current sensing occasion and the current DRX cycle according to an embodiment of the present application. As shown in FIG. 4, in the 5G V2X system, when UE is configured with DRX to save power on the reception, and UE performs resource allocation through partial sensing, the relationship between the current sensing occasion of UE and the current DRX cycle includes the following four situations:

the current sensing occasion fully overlaps with the ON duration of the current DRX cycle, as shown in FIG. 4 (a);
a part of the current sensing occasion overlaps with the ON duration of the current DRX cycle, and a remaining part of the current sensing occasion overlaps with an OFF duration of the current DRX cycle, as shown in FIG. 4 (b);
a part of the current sensing occasion overlaps with the OFF duration of the current DRX cycle, and a remaining part of the current sensing occasion overlaps with the ON duration of the next DRX cycle, as shown in FIG. 4 (c); and
the current sensing occasion fully overlaps with the OFF duration of the current DRX cycle, as shown in FIG. 4 (d).

When the UE performs partial sensing, UE first determines whether the current sensing occasion fully overlaps with the ON duration of the current DRX cycle, that is, whether situation shown in FIG. 4 (a) occurs.

Whether the current sensing occasion fully overlaps with the ON duration of the current DRX cycle may be determined based on a relationship between a start time of a current sensing occasion timer, a duration of the current sensing occasion timer, a start time of a current DRX on duration timer, a duration of the current DRX on duration timer, and a duration of a current DRX inactivity timer.

For example, if the start time of the current sensing occasion timer is 0, the duration of the current sensing occasion timer is 20 ms, the start time of the current DRX on duration timer is 0, the duration of the current DRX on duration timer is 50 ms, and the duration of the current DRX inactivity timer is 50 ms, it may be determined that the current sensing occasion fully overlaps with the ON duration of the current DRX cycle.

Step 302: when the current sensing occasion does not fully overlap with the ON duration of the current DRX cycle, performing resource sensing within a target time period within the ON duration of a next DRX cycle.

For example, after the UE determines whether the current sensing occasion fully overlaps with the ON duration of the current DRX cycle, the UE performs resource sensing based on the determination result.

If the current sensing occasion fully overlaps with the ON duration of the current DRX cycle, as shown in FIG. 4 (a), the UE may receive SCI within the current sensing occasion, and the UE performs resource sensing based on the received SCI within the sensing occasion.

If the current sensing occasion does not fully overlap with the ON duration of the current DRX cycle, as shown in (b), (c), or (d) in FIG. 4, the UE performs resource sensing within the target time period within the ON duration of the next DRX cycle.

The target time period is a time period for continuous sensing, and the start time and/or the length of the target time period may be configured by the network side device, pre-defined by the protocol, or determined by the UE.

The resource sensing method provided in the embodiments of the present application improves the reliability of data transmission by continuously sensing for a period of time within the ON duration of the next DRX cycle when partial sensing occasion does not overlap with the ON duration of the DRX cycle.

In an embodiment, the current sensing occasion does not fully overlap with the ON duration of the current DRX cycle includes:
a part of the current sensing occasion overlaps with the ON duration of the current DRX cycle, and the remaining part of the current sensing occasion overlaps with an OFF duration of the current DRX cycle.

As shown in FIG. 4 (b), in an embodiment, the current sensing occasion does not fully overlap with the ON duration of the current DRX cycle includes:
a part of the current sensing occasion overlaps with the ON duration of the current DRX cycle, and the remaining part of the current sensing occasion overlaps with an OFF duration of the current DRX cycle.

For example, if the start time of the current sensing occasion timer is 45 ms, the duration of the current sensing occasion timer is 20 ms, the start time of the current DRX on duration timer is 0, the duration of the current DRX on duration timer is 50 ms, and the duration of the current DRX inactivity timer is 50 ms, the first 5 ms of the current sensing occasion overlaps with the ON duration of the current DRX cycle, and UE may receive SCI and perform resource sensing within this 5 ms. The last 15 ms of the current sensing occasion overlaps with the OFF duration of the current DRX cycle, and the UE is unable to both receive SCI and perform resource sensing within this 15 ms.

In the resource sensing method according to the embodiment of the present application, when a part of the current sensing occasion overlaps with the ON duration of the current DRX cycle and the remaining part of the current sensing occasion overlaps with the OFF duration of the current DRX cycle, the UE performs continuous sensing for a period of time within the ON duration of the next DRX cycle, improving the reliability of data transmission.

In an embodiment, the current sensing occasion does not fully overlap with the ON duration of the current DRX cycle includes:
the current sensing occasion fully overlaps with the OFF duration of the current DRX cycle.

As shown in FIG. 4 (d), in an embodiment, the current sensing occasion does not fully overlap with the ON duration of the current DRX cycle includes:
the current sensing occasion fully overlaps with the OFF duration of the current DRX cycle.

For example, if the start time of the current sensing occasion timer is 55 ms, the duration of the current sensing occasion timer is 20 ms, the start time of the current DRX on duration timer is 0, the duration of the current DRX on duration timer is 50 ms, and the duration of the current DRX inactivity timer is 50 ms, the current sensing occasion fully overlaps with the OFF duration of the current DRX cycle, thereby UE is unable to receive SCI, and to perform resource sensing.

In the resource sensing method according to an embodiment of the present application, when the current sensing occasion fully overlaps with the OFF duration of the current DRX cycle, the UE performs continuous sensing for a period of time within the ON duration of the next DRX cycle, improving the reliability of data transmission.

In an embodiment, the current sensing occasion does not fully overlap with the ON duration of the current DRX cycle includes:

a part of the current sensing occasion overlaps with the OFF duration of the current DRX cycle, and a remaining part of the current sensing occasion overlaps with the ON duration of the next DRX cycle.

As shown in FIG. 4 (c), in an embodiment, the current sensing occasion does not fully overlap with the ON duration of the current DRX cycle includes:

a part of the current sensing occasion overlaps with the OFF duration of the current DRX cycle, and a remaining part of the current sensing occasion overlaps with the ON duration of the next DRX cycle.

For example, if the start time of the current sensing occasion timer is 95 ms, the duration of the current sensing occasion timer is 20 ms, the start time of the current DRX on duration timer is 0, the duration of the current DRX on duration timer is 50 ms, and the duration of the current DRX inactivity timer is 50 ms, the first 5 ms of the current sensing occasion overlaps with the OFF duration of the current DRX cycle, the UE is unable to both receive SCI and to perform resource sensing within this 5 ms; and the last 15 ms of the current sensing occasion overlaps with the ON duration of the next DRX cycle, the UE may receive SCI and perform resource sensing within this 15 ms.

In the resource sensing method according to an embodiment of the present application, when a part of the current sensing occasion overlaps with the OFF duration of the current DRX cycle, and the remaining part of the current sensing occasion overlaps with the ON duration of the next DRX cycle, the UE performs continuous sensing for a period of time within the ON duration of the next DRX cycle, improving the reliability of data transmission.

In an embodiment, before the determining whether the current sensing occasion fully overlaps with the ON duration of the current DRX cycle, the method further includes:

receiving a first configuration message transmitted from a network-side device, where the first configuration message includes a start location of the target time period; or,
the start location of the target time period is pre-configured; or
before the performing the resource sensing within the target time period within the ON duration of the next DRX cycle, the method further includes:
determining a start location of the target time period.

In an embodiment, the start location of the target time period is configured by the network-side device. Before the UE determines whether the current sensing occasion fully overlaps with the ON duration of the current DRX cycle, the network-side device transmits the first configuration message to the UE, the first configuration message includes the start location of the target time period.

The UE receives the first configuration message transmitted from the network-side device and analyzes the start location of the target time period from the first configuration message.

The first configuration message may be carried on a radio resource control (RRC) message or a media access control-control element (MAC-CE) message, or a downlink control information (DCI) message.

For example, the network-side device transmits the DCI message to the UE, where the DCI message contains that the start location of the target time period is 30 ms after the start time of the ON duration of the next DRX cycle.

For example, the network-side device transmits the MAC-CE message to the UE, where the MAC-CE message contains that the start location of the target time period is 35 ms after the start time of the ON duration of the next DRX cycle.

In the resource sensing method provided in the embodiments of the present application, the start location of the target time period is configured by the network-side device, which increases flexibility and may be applied to different scenarios.

In the embodiments of the present application, the start location of the target time period may also be pre-configured, i.e. pre-defined by the protocol.

For example, the start location of the target time period is pre-defined through the protocol to be 30 ms after the start time of the ON duration of the next DRX cycle.

For example, the start location of the target time period is pre-defined through the protocol to be 35 ms after the start time of the ON duration of the next DRX cycle.

In the resource sensing method provided in the embodiments of the present application, the start location of the target time period is pre-defined through the protocol, which reduces signaling overhead.

In the embodiments of the present application, the start location of the target time period may also be determined by the UE.

The UE may determine the start location of the target time period based on its own synchronization precision. UE may also determine the start location of the target time period based on the main frequency of its central processing unit (CPU).

For example, when the synchronization precision of the UE is higher than 1 microsecond, the start location of the target time period is the same as the start location of the ON duration of the next DRX cycle.

When the synchronization precision of the UE is less than 1 microsecond, the start location of the target

In the resource sensing method provided in the embodiments of the present application, the UE may determine the start location of the target time period based on its own situation, which improves the reliability of data transmission.

In an embodiment, the start location of the target time period is the same as a start location of the ON duration of the next DRX cycle.

For example, the start location of the target time period is the same as the start location of the ON duration of the next DRX cycle.

For example, if the start time of the current sensing occasion timer is 55 ms, the duration of the current sensing occasion timer is 20 ms, the start time of the current DRX on duration timer is 0, the duration of the current DRX on duration timer is 50 ms, and the duration of the current DRX inactivity timer is 50 ms, the current sensing occasion fully overlaps with the OFF duration of the current DRX cycle, and the UE is unable to both receive SCI and to perform resource sensing.

UE performs continuous sensing from the start location of the ON duration of the next DRX cycle, i.e., 100 ms.

For example, if the start time of the current sensing occasion timer is 95 ms, the duration of the current sensing occasion timer is 20 ms, the start time of the current DRX on duration timer is 0, the duration of the current DRX on duration timer is 50 ms, and the duration of the current DRX inactivity timer is 50 ms, the first 5 ms of the current sensing occasion overlaps with the OFF duration of the current DRX cycle, and the UE is unable to both receive SCI and to perform resource sensing within this 5 ms.

The UE performs continuous sensing from the start location of the ON duration of the next DRX cycle, i.e., 100 ms.

In the resource sensing method provided in the embodiments of the present application, the start location of the target time period is the same as the start location of the ON duration of the next DRX cycle, the UE may perform resource sensing as soon as possible.

In an embodiment, the start location of the target time period is a fixed target position within the ON duration of the next DRX cycle.

For example, the start location of the target time period is the fixed target position within the ON duration of the next DRX cycle.

The fixed target position may be 10 ms after the start location of the ON duration of the next DRX cycle, or 20 ms after the start location of the ON duration of the next DRX cycle, or a middle position of the ON duration of the next DRX cycle.

For example, if the start time of the current sensing occasion timer is 55 ms, the duration of the current sensing occasion timer is 20 ms, the start time of the current DRX on duration timer is 0, the duration of the current DRX on duration timer is 50 ms, and the duration of the current DRX inactivity timer is 50 ms, the current sensing occasion fully overlaps with the OFF duration of the current DRX cycle, the UE is unable to both receive SCI and to perform resource sensing.

UE performs continuous sensing from 10 ms after the start location of the ON duration of the next DRX cycle, i.e., 110 ms.

For example, if the start time of the current sensing occasion timer is 95 ms, the duration of the current sensing occasion timer is 20 ms, the start time of the current DRX on duration timer is 0, the duration of the current DRX on duration timer is 50 ms, and the duration of the current DRX inactivity timer is 50 ms, the first 5 ms of the current sensing occasion overlaps with the OFF duration of the current DRX cycle, thereby UE is unable to receive SCI, and to perform resource sensing within this 5 ms.

The UE performs continuous sensing from the middle position after the start location of the ON duration of the next DRX cycle, i.e., 125 ms.

In the resource sensing method provided in the embodiments of the present application, the start location of the target time period is the fixed target position within the ON duration of the next DRX cycle, which may eliminate the impact of time asynchrony and further improve the reliability of data transmission.

In an embodiment, for periodic services, a length of the target time period is not less than a maximum sensing cycle in a case that service latency is ensured.

For example, for periodic services, the length of the target time period is not less than the maximum sensing cycle in the case that service latency is ensured.

For example, for periodic services, if the maximum sensing cycle is 20 ms, the length of the target time period is set to 20 ms in the case that service latency is ensured.

For example, for periodic services, if the maximum sensing cycle is 20 ms, the length of the target time period is set to 25 ms in the case that service latency is ensured.

For periodic service transmission, the problem of unsensed resource collision may be avoided by adjusting a size of the duration of continuous sensing.

In the resource sensing method provided in the embodiments of the present application, for periodic services, the length of the target time period is not less than the maximum sensing cycle in the case that service latency is ensured, which further improves the reliability of data transmission.

In an embodiment, for periodic services, an end position of the target time period does not exceed an end position of the ON duration of the next DRX cycle in a case that service latency is not ensured.

For example, for periodic services, in the case that service latency is not ensured, the end position of the target time period does not exceed the end position of the ON duration of the next DRX cycle.

For example, for periodic services, in the case that service latency is not ensured, if the start time of the current sensing occasion timer is 55 ms, the duration of the current sensing occasion timer is 20 ms, the start time of the current DRX on duration timer is 0, the duration of the current DRX on duration timer is 50 ms, and the duration of the current DRX inactivity timer is 50 ms, the current sensing occasion fully overlaps with the OFF duration of the current DRX cycle, and UE is unable to both receive SCI and perform resource sensing.

UE performs resource sensing within the target time period within the ON duration of the next DRX cycle, and the end position of the target time period is not more than 150 ms.

For periodic service transmission, the problem of unsensed resource collision may be avoided by adjusting the duration of continuous sensing.

In the resource sensing method provided in the embodiments of the present application, for periodic services, in the case that service latency is not ensured, the end position of the target time period does not exceed the end position of the ON duration of the next DRX cycle , which further improves the reliability of data transmission.

In an embodiment, for aperiodic services, an end position of the target time period does not exceed an end position of the ON duration of the next DRX cycle.

For example, for aperiodic services, the duration for continuous sensing should be as short as possible, and the end position of the target time period does not exceed the end position of the ON duration of the next DRX cycle.

For example, for aperiodic services, if the start time of the current sensing occasion timer is 55 ms, the duration of the current sensing occasion timer is 20 ms, the start time of the current DRX on duration timer is 0, the duration of the current DRX on duration timer is 50 ms, and the duration of the current DRX inactivity timer is 50 ms, the current sensing occasion fully overlaps with the OFF duration of the current DRX cycle, and the UE is unable to receive SCI and perform resource sensing.

The UE performs resource sensing within the target time period within the ON duration of the next DRX cycle, and the end position of the target time period is not more than 150 ms.

For aperiodic service transmission, continuous sensing over a period of time increases a sensing range and reduces the probability of resource collision.

In the resource sensing method provided in the embodiments of the present application, for aperiodic services, the end position of the target time period does not exceed the end position of the ON duration of the next DRX cycle, which further improves the reliability of data transmission.

Additionally, it should be noted that:

1. The DRX cycle may be smaller than a partial sensing window.

FIG. 5 is a first schematic diagram of a relationship between a DRX cycle and a partial sensing window size according to an embodiment of the present application. As shown in FIG. 5, when a sensing occasion interval within the partial sensing window is an integer multiple of the DRX cycle, each sensing occasion of the partial sensing must sense within the DRX ON duration.

FIG. 6 is a second schematic diagram of the relationship between the DRX cycle and the partial sensing window size according to an embodiment of the present application. As shown in FIG. 6, when the sensing occasion interval within the partial sensing window is not an integer multiple of the DRX cycle, sensing is performed within the sensing occasion of the partial sensing that overlaps with the DRX ON duration, and sensing is not performed within the sensing occasion of the partial sensing that overlaps with the DRX OFF duration. After DRX OFF duration ends, a continuous sensing is performed for a period of time when the DRX ON duration enters.

2. The DRX cycle may be larger than the partial sensing window.

FIG. 7 is a third schematic diagram of the relationship between the DRX cycle and the partial sensing window size according to an embodiment of the present application. As shown in FIG. 7, when a part of the current sensing occasion within the partial sensing window falls within the DRX ON duration, sensing is performed within the sensing occasion of the partial sensing within the DRX ON duration, and sensing is not performed within the sensing occasion within the DRX OFF duration. After DRX OFF duration ends, continuous sensing is performed for a period of time when the DRX ON duration enters.

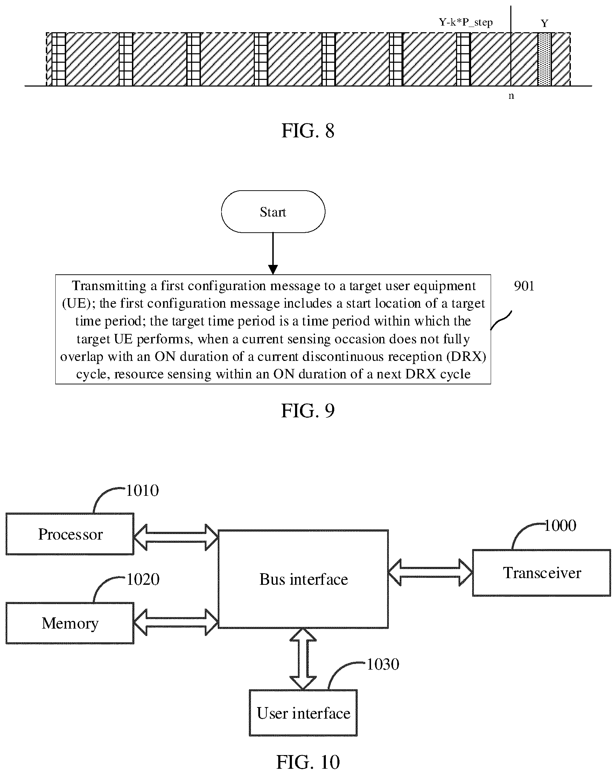

FIG. 8 is a fourth schematic diagram of the relationship between the DRX cycle and the partial sensing window size according to an embodiment of the present application. As shown in FIG. 8, when all sensing occasions within the partial sensing window fall within the DRX ON duration, sensing is performed within each sensing occasion of the partial sensing within the DRX ON duration.

FIG. 9 is a second schematic flowchart of a resource sensing method according to an embodiment of the present application. As shown in FIG. 9, an embodiment of the present application provides a resource sensing method, which may be performed by a network-side device, for example, a base station. The method includes:

Step 901: transmitting a first configuration message to a target user equipment (UE); the first configuration message includes a start location of a target time period; the target time period is a time period within which the target UE performs, when a current sensing occasion does not fully overlap with an ON duration of a current discontinuous reception (DRX) cycle, resource sensing within an ON duration of a next DRX cycle.

In an embodiment, the current sensing occasion does not fully overlap with the ON duration of the current DRX cycle includes:

a part of the current sensing occasion overlaps with the ON duration of the current DRX cycle, and the remaining part of the current sensing occasion overlaps with an OFF duration of the DRX cycle.

In an embodiment, the current sensing occasion does not fully overlap with the ON duration of the current DRX cycle includes:

the current sensing occasion fully overlaps with the OFF duration of the current DRX cycle.

In an embodiment, the current sensing occasion does not fully overlap with the ON duration of the current DRX cycle includes:

a part of the current sensing occasion overlaps with the OFF duration of the current DRX cycle, and a remaining part of the current sensing occasion overlaps with the ON duration of the next DRX cycle.

In an embodiment, the start location of the target time period is same as a start location of the ON duration of the next DRX cycle.

In an embodiment, the start location of the target time period is a fixed target position within the ON duration of the next DRX cycle.

In an embodiment, for periodic services, a length of the target time period is not less than a maximum sensing cycle in a case that service latency is ensured.

In an embodiment, for periodic services, an end position of the target time period does not exceed an end position of the ON duration of the next DRX cycle in a case that service latency is not ensured.

In an embodiment, for aperiodic services, an end position of the target time period does not exceed an end position of the ON duration of the next DRX cycle.

The resource sensing methods provided in the embodiments of the present application may refer to the method embodiment where the executing entity is the user equipment, and may achieve the same effect. The same parts and effects as the corresponding method embodiments mentioned above are not repeated here.

FIG. 10 is a schematic structural diagram of a user equipment (UE) according to an embodiment of the present application. As shown in FIG. 10, the UE includes a memory 1020, a transceiver 1000, and a processor 1010.

The memory 1020 is used to store computer programs; the transceiver 1000 is used to transmit and receive data under the control of the processor 1010; the computer programs, when executed by the processor 1010, cause the UE to perform the following operations:

determining whether a current sensing occasion fully overlaps with an ON duration of a current discontinuous reception (DRX) cycle; and

performing, when the current sensing occasion does not fully overlap with the ON duration of the current DRX cycle, resource sensing within a target time period within an ON duration of a next DRX cycle.

The transceiver 1000 is used to receive and transmit data under the control of processor 1010.

In FIG. 10, a bus architecture may include any number of interconnected buses and bridges, and for example, the bus architecture is linked by one or more processors represented by processor 1010 and various circuits of memory represented by memory 1020. The bus architecture may also link various other circuits such as peripheral devices, regulators, and power management circuits together. A bus interface provides an interface. The transceiver 1000 may be a plurality of components, i.e., the transceiver 1000 may include a transmitter and a receiver, providing a unit for communicating with various other devices on transmission media, the transmission media including wireless channels, wired channels, optical cables, and other transmission media. For different user devices, a user interface 1030 may also be an interface that may connect external and internal devices, including but not limited to keyboards, monitors, speakers, microphones, joysticks, etc.

The processor 1010 is used to manage the bus architecture and general processing, and the memory 1020 may store data used by processor 1010 during operation execution.

In an embodiment, the processor 1010 may be a central processing unit (CPU), an application specific integrated circuit (ASIC), an field programmable gate array (FPGA), or a complex programmable logic device (CPLD), and the processor may also adopt a multi-core architecture.

The processor is used to execute any one of the methods according to an embodiment of the present application according to the obtained executable instructions by calling a computer program stored in the memory. The processor and the memory may also be arranged physically separately.

In an embodiment, the current sensing occasion does not fully overlap with the ON duration of the current DRX cycle includes:

a part of the current sensing occasion overlaps with the ON duration of the current DRX cycle, and the remaining part of the current sensing occasion overlaps with an OFF duration of the DRX cycle.

In an embodiment, the current sensing occasion does not fully overlap with the ON duration of the current DRX cycle includes:

the current sensing occasion fully overlaps with the OFF duration of the current DRX cycle.

In an embodiment, the current sensing occasion does not fully overlap with the ON duration of the current DRX cycle includes:

a part of the current sensing occasion overlaps with the OFF duration of the current DRX cycle, and a remaining part of the current sensing occasion overlaps with the ON duration of the next DRX cycle.

In an embodiment, before the determining whether the current sensing occasion fully overlaps with the ON duration of the current DRX cycle, the method further includes:

receiving a first configuration message transmitted from a network-side device, where the first configuration message includes a start location of the target time period; or,
the start location of the target time period is pre-configured; or
before the performing the resource sensing within the target time period within the ON duration of the next DRX cycle, the method further includes:
determining a start location of the target time period.

In an embodiment, the start location of the target time period is same as a start location of the ON duration of the next DRX cycle.

In an embodiment, the start location of the target time period is a fixed target position within the ON duration of the next DRX cycle.

In an embodiment, for periodic services, a length of the target time period is not less than a maximum sensing cycle in a case that service latency is ensured.

In an embodiment, for periodic services, an end position of the target time period does not exceed an end position of the ON duration of the next DRX cycle in a case that service latency is not ensured.

In an embodiment, for aperiodic services, an end position of the target time period does not exceed an end position of the ON duration of the next DRX cycle.

It should be noted that the above user equipment according to an embodiment of the present application may achieve all the method steps implemented by the method embodiments with the executing entity as the user equipment, and may achieve the same effect. The same parts and effects as the method embodiments in this embodiment are not repeated here.

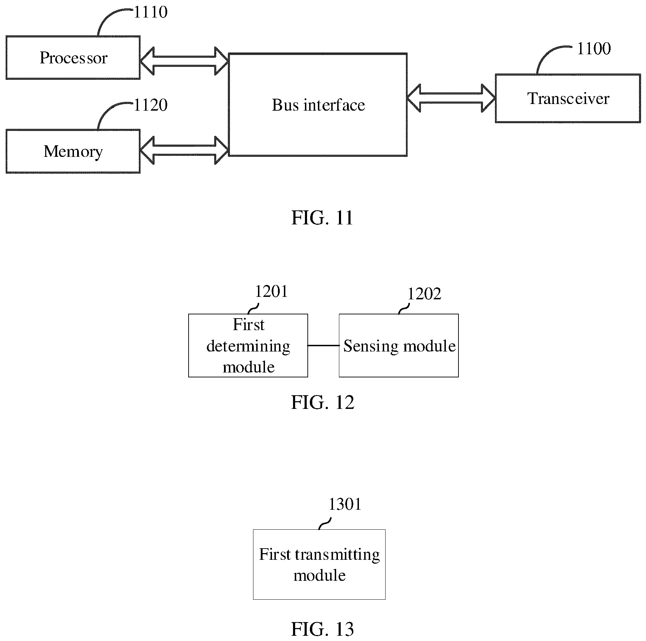

FIG. 11 is a schematic structural diagram of a network-side device according to an embodiment of the present application. As shown in FIG. 11, the network-side device includes a memory 1120, a transceiver 1100, and a processor 1110.

The memory 1120 is used to store computer programs; the transceiver 1100 is used to transmit and receive data under the control of the processor 1110; the computer programs, when executed by the processor 1110, cause the network-side device to perform the following operations:
transmitting a first configuration message to a target user equipment (UE), where the first configuration message includes a start location of a target time period, the target time period is a time period within which the target UE performs, when a current sensing occasion does not fully overlap with an ON duration of a current discontinuous reception (DRX) cycle, resource sensing within an ON duration of a next DRX cycle.

The transceiver 1100 is used to receive and transmit data under the control of processor 1110.

In FIG. 11, a bus architecture may include any number of interconnected buses and bridges, and for example, the bus architecture is linked by one or more processors represented by processor 1110 and various circuits of memory represented by memory 1120. The bus architecture may also link various other circuits such as peripheral devices, regulators, and power management circuits together. A bus interface provides an interface. The transceiver 1100 may be a plurality of components, i.e., the transceiver 1100 may include a transmitter and a receiver, providing a unit for communicating with various other devices on transmission media, the transmission media including wireless channels, wired channels, optical cables, and other transmission media. The processor 1110 is used to manage the bus architecture and general processing, and the memory 1120 may store data used by processor 1110 during operation execution.

Processor 1110 may be a central processing unit (CPU), an application specific integrated circuit (ASIC), an field programmable gate array (FPGA), or a complex programmable logic device (CPLD), and the processor may also adopt a multi-core architecture.

In an embodiment, the current sensing occasion does not fully overlap with the ON duration of the current DRX cycle includes:
a part of the current sensing occasion overlaps with the ON duration of the current DRX cycle, and the remaining part of the current sensing occasion overlaps with an OFF duration of the DRX cycle.

In an embodiment, the current sensing occasion does not fully overlap with the ON duration of the current DRX cycle includes:
the current sensing occasion fully overlaps with the OFF duration of the current DRX cycle.

In an embodiment, the current sensing occasion does not fully overlap with the ON duration of the current DRX cycle includes:
a part of the current sensing occasion overlaps with the OFF duration of the current DRX cycle, and a remaining part of the current sensing occasion overlaps with the ON duration of the next DRX cycle.

In an embodiment, the start location of the target time period is same as a start location of the ON duration of the next DRX cycle.

In an embodiment, the start location of the target time period is a fixed target position within the ON duration of the next DRX cycle.

In an embodiment, for periodic services, a length of the target time period is not less than a maximum sensing cycle in a case that service latency is ensured.

In an embodiment, for periodic services, an end position of the target time period does not exceed an end position of the ON duration of the next DRX cycle in a case that service latency is not ensured.

In an embodiment, for aperiodic services, an end position of the target time period does not exceed an end position of the ON duration of the next DRX cycle.

It should be noted that the network-side device according to an embodiment of the present application may achieve all the method steps implemented by the method embodiments with the network-side device as the executing subject, and may achieve the same effect. The same parts and effects as the method embodiment in this embodiment are not repeated here.

FIG. 12 is a first schematic structural diagram of a resource sensing apparatus according to an embodiment of the present application. As shown in FIG. 12, an embodiment of the present application provides a resource sensing apparatus, including:

a first determining module 1201, used to determine whether a current sensing occasion fully overlaps with an ON duration of a current discontinuous reception (DRX) cycle; and
a sensing module 1202, used to perform resource sensing in a target time period of an ON duration of a next DRX cycle if the current sensing occasion does not fully overlap with the ON duration of the current DRX cycle.

In an embodiment, the current sensing occasion does not fully overlap with the ON duration of the current DRX cycle includes:
a part of the current sensing occasion overlaps with the ON duration of the current DRX cycle, and the remaining part of the current sensing occasion overlaps with an OFF duration of the DRX cycle.

In an embodiment, the current sensing occasion does not fully overlap with the ON duration of the current DRX cycle includes:
the current sensing occasion fully overlaps with the OFF duration of the current DRX cycle.

In an embodiment, the current sensing occasion does not fully overlap with the ON duration of the current DRX cycle includes:
a part of the current sensing occasion overlaps with the OFF duration of the current DRX cycle, and a remaining part of the current sensing occasion overlaps with the ON duration of the next DRX cycle.

In an embodiment, the apparatus further includes a first receiving module;

where the first receiving module is used to receive a first configuration message transmitted from a network-side device before the determine whether the current sensing occasion fully overlaps with the ON duration of the discontinuous reception DRX cycle; the first configuration message includes a start location of the target time period; or, the start location of the target time period is pre-configured; or

the apparatus further includes a second determining module;
the second determining module is used to determine the start location of the target time period before the perform the resource sensing within the target time period within the ON duration of the next DRX cycle.

In an embodiment, the start location of the target time period is same as a start location of the ON duration of the next DRX cycle.

In an embodiment, the start location of the target time period is a fixed target position within the ON duration of the next DRX cycle.

In an embodiment, for periodic services, a length of the target time period is not less than a maximum sensing cycle in a case that service latency is ensured.

In an embodiment, for periodic services, an end position of the target time period does not exceed an end position of the ON duration of the next DRX cycle in a case that service latency is not ensured.

In an embodiment, for aperiodic services, an end position of the target time period does not exceed an end position of the ON duration of the next DRX cycle.

The resource sensing apparatus according to an embodiment of the present application may achieve all the method steps implemented by the method embodiment with the executing entity as the user equipment, and may achieve the same effect. The same parts and effects as the method embodiments in this embodiment are not repeated.

FIG. 13 is a second schematic structural diagram of a resource sensing apparatus according to an embodiment of the present application. As shown in FIG. 13, an embodiment of the present application provides a resource sensing apparatus, including:
a first transmitting module 1301, used to transmit a first configuration message to a target user equipment; the first configuration message includes a start location of a target time period; the target time period is a time period within which the target user equipment performs, when a current sensing occasion does not fully overlap with an ON duration of a current discontinuous reception (DRX) cycle, resource sensing within an ON duration of a next DRX cycle.

The apparatus further includes a second receiving module, used to receive a random access request message transmitted from the user equipment.

In an embodiment, the current sensing occasion does not fully overlap with the ON duration of the current DRX cycle includes:
a part of the current sensing occasion overlaps with the ON duration of the current DRX cycle, and the remaining part of the current sensing occasion overlaps with an OFF duration of the DRX cycle.

In an embodiment, the current sensing occasion does not fully overlap with the ON duration of the current DRX cycle includes:
the current sensing occasion fully overlaps with the OFF duration of the current DRX cycle.

In an embodiment, the current sensing occasion does not fully overlap with the ON duration of the current DRX cycle includes:

a part of the current sensing occasion overlaps with the OFF duration of the current DRX cycle, and a remaining part of the current sensing occasion overlaps with the ON duration of the next DRX cycle.

In an embodiment, the start location of the target time period is same as a start location of the ON duration of the next DRX cycle.

In an embodiment, the start location of the target time period is a fixed target position within the ON duration of the next DRX cycle.

In an embodiment, for periodic services, a length of the target time period is not less than a maximum sensing cycle in a case that service latency is ensured.

In an embodiment, for periodic services, an end position of the target time period does not exceed an end position of the ON duration of the next DRX cycle in a case that service latency is not ensured.

In an embodiment, for aperiodic services, an end position of the target time period does not exceed an end position of the ON duration of the next DRX cycle.

The resource sensing apparatus according to the embodiments of the present application may achieve all the method steps implemented in the method embodiments where the execution entity is the network-side device, and may achieve the same effect. The same parts and effects as the method embodiments in this embodiment are not repeated.

It should be noted that the division of units/modules in the above embodiments of the application is schematic and only serves as a logical functional division. In actual implementation, other divisions may be adopted. In addition, in various embodiments of the present application, each functional unit may be integrated into one processing unit, and each unit may also be provided physically separately, or two or more units may be integrated into one unit. The integrated unit mentioned above may be implemented in a form of hardware and also in a form of software functional unit.

If the integrated unit is implemented in the form of a software functional unit and sold or used as an independent product, the integrated unit may be stored in a processor-readable storage medium. Based on such understanding, the solution disclosed in this disclosure may essentially or partially contribute to the prior art, or all or part of the solution may be reflected in a form of software product. The software product is stored in a storage medium, including several instructions to enable a computer device (which may be a personal computer, a server, or a network device, etc.) or processor to execute all or part of the steps of the methods described in various embodiments of the present application. The aforementioned storage media include: USB flash drives, mobile hard drives, read only memory (ROM), random access memory (RAM), magnetic disks or optical discs, and other media that may store program codes.

An embodiment of the present application also provides a processor-readable storage medium, where the processor-readable storage medium stores a computer program for causing a processor to execute the methods provided by the aforementioned embodiments, including:

determining whether a current sensing occasion fully overlaps with an ON duration of a current discontinuous reception (DRX) cycle; and
performing, when the current sensing occasion does not fully overlap with the ON duration of the current DRX cycle, resource sensing within a target time period within an ON duration of a next DRX cycle.

Or the method includes:
transmitting a first configuration message to a target user equipment (UE), where the first configuration message includes a start location of a target time period, the target time period is a time period within which the target UE performs, when a current sensing occasion does not fully overlap with an ON duration of a current discontinuous reception (DRX) cycle, resource sensing within an ON duration of a next DRX cycle.

It should be noted that, the processor-readable storage medium may be any available medium or data storage device that a processor may access, including but not limited to magnetic memory (for example, floppy disks, hard disks, magnetic tapes, magneto-optical disks (MO), etc.), optical memory (for example, CDs, DVDs, BDs, HVDs, etc.), and semiconductor memory (for example, ROM, EPROM, EEPROM, non-volatile memory (NAND FLASH), solid-state drive (SSD), etc.).

It should be noted that, the term "and/or" in the embodiments of the present application describes an association relationship of the associated object, which may indicate three types of relationships. For example, A and/or B, which may represent: A exists alone, A and B exist simultaneously, and B exists alone. The character "/" generally indicates that the associated object is in an 'or' relationship.

The term "a plurality of' in the embodiments of the present application refers to two or more, similar to other quantifiers.

The solution provided in the embodiments of the present application may be applicable to various systems, especially 5G systems. For example, the applicable systems may be the global system of mobile communication (GSM) system, code division multiple access (CDMA) system, broadband code division multiple access (WCDMA) general packet radio service (GPRS) system, long term evolution (LTE) system, LTE frequency division duplex (FDD) system, LTE time division duplex (TDD) system, advanced long term evolution advanced (LTE-A) system, universal mobile telecommunications system (UMTS), global interoperability for microwave access (WiMAX) system, 5G new radio (NR) system, etc. These various systems include terminal devices and network devices. The system may also include a core network component, such as the evolved packet system (EPS), 5G system (5GS), etc.

The terminal devices referred to in the embodiments of the present application may be devices that provide voice and/or data connectivity to users, handheld devices with wireless connection functions, or other processing devices connected to wireless modems. In different systems, names of terminal devices may also vary. For example, in 5G systems, terminal devices may be referred to as user equipments (UEs). Wireless terminal devices may communicate with one or more core networks (CN) through a radio access network (RAN). Wireless terminal devices may be mobile terminal devices, such as mobile phones (or "cellular" phones) and computers with mobile terminal devices, such as portable, pocket, handheld, computer built-in, or car mounted mobile devices. They exchange language and/or data with wireless access networks. For example, personal communication service (PCS) phones, cordless phones, session initiated protocol (SIP) phones, wireless local loop (WLL) stations, personal digital assistants (PDAs), and other devices. Wireless terminal devices may also be referred to as systems, subscriber units, subscriber stations, mobile stations, remote stations, access points, remote terminal devices, access terminal devices, user terminal devices, user agents, user devices, and it is not limited in the embodiments of the present application.

The network device referred to in the embodiments of the present application may be a base station, which may include a plurality of cells providing services for the user equipment. According to different application scenarios, base stations may also be referred to as access points, or they may be devices in the access network that communicate with wireless terminal devices through one or more sectors on the air interface, or they may be refer to other names. Network devices may be used to classify and exchange received air frames and Internet protocol (IP), serve as routers between wireless terminal devices and the rest of the access network, the rest of the access network may include the Internet protocol (IP) communication network. Network devices may also coordinate attribute management of air interfaces. For example, network devices referred to in the embodiments of the present application may be network devices (BTS) in the global system for mobile communications (GSM) or code division multiple access (CDMA), or network devices (NodeB) in broadband code division multiple access (WCDMA), evolutionary network devices (eNB or e-NodeB) in a long term evolution (LTE) system, 5G base stations (gNB) in a 5G network architecture (next generation system), or home evolutionary nodes B (HeNB), relay nodes, femtos, picos, etc., and it is not limited in the embodiments of the present application. In some network structures, network devices may include centralized unit (CU) nodes and distributed unit (DU) nodes, and centralized units and distributed units may also be geographically separated.

Network devices and terminal devices may each use one or more antennas for multi input multi output (MIMO) transmission, MIMO may be single user MIMO (SU MIMO) or multiple user MIMO (MU-MIMO). According to the shape and number of root antenna combinations, MIMO transmission may be 2D-MIMO, 3D-MIMO, FD-MIMO, or Massive MIMO, as well as diversity transmission, precoding transmission, beamforming transmission, etc.

Those skilled in the art should understand that embodiments disclosed herein may be provided as methods, systems, or computer program products. Therefore, the present application may take a form of complete hardware embodiments, complete software embodiments, or embodiments combining software and hardware. Moreover, the present application may take a form of computer program products implemented on one or more computer available storage medium (including but not limited to disk storage, optical storage, etc.) containing computer available program codes.

The present application is described with reference to the flowcharts and/or block diagrams of the methods and devices (systems), and computer program product according to an embodiment of the present application. It should be understood that each process and/or box in the flowchart and/or block diagram, as well as the combination of processes and/or boxes in the flowchart and/or block diagram, may be implemented by computer executable instructions. These computer executable instructions may be provided to processors of general-purpose computers, specialized computers, embedded processors, or other programmable data processing devices to generate a machine, allowing instructions executed by processors of computers or other programmable data processing devices to generate devices for implementing functions specified in one or more steps of a flowchart or one or more blocks in a block diagram.

These processor executable instructions may also be stored in a processor readable memory that may guide computers or other programmable data processing devices to work in a specific way, causing the instructions stored in the processor readable memory to generate manufactures including an instruction device, the instruction device implementing the functions specified in one or more processes and/or blocks of a flowchart.

These processor executable instructions may also be loaded onto a computer or other programmable data processing device to perform a series of operational steps on the computer or other programmable device to generate computer-implemented processing. The instructions executed on the computer or other programmable device provide steps for implementing the functions specified in one or more processes and/or blocks of a flowchart.

Those skilled in the art may make various modifications and variations to the present application without departing from the scope of the present application. In this way, if these modifications and variations of the present application fall within the scope of the claims and their equivalents, the present application also intends to include these modifications and variations.

**Claims**

1. A resource sensing method, applied to a user equipment, UE, comprising:

   determining whether a current sensing occasion fully overlaps with an ON duration of a current discontinuous reception, DRX, cycle; and
   when the current sensing occasion does not fully overlap with the ON duration of the current DRX cycle, performing resource sensing within a target time period within an ON duration of a next DRX cycle.

2. The resource sensing method of claim 1, wherein the current sensing occasion does not fully overlap with the ON duration of the current DRX cycle comprises:
   a part of the current sensing occasion overlaps with the ON duration of the current DRX cycle, and a remaining part of the current sensing occasion overlaps with an OFF duration of the current DRX cycle.

3. The resource sensing method of claim 1, wherein the current sensing occasion does not fully overlap with the ON duration of the current DRX cycle comprises:
   the current sensing occasion fully overlaps with an OFF duration of the current DRX cycle.

4. The resource sensing method of claim 1, wherein the current sensing occasion does not fully overlap with the ON duration of the current DRX cycle comprises:
   a part of the current sensing occasion overlaps with an OFF duration of the current DRX cycle, and a remaining part of the current sensing occasion overlaps with the ON duration of the next DRX cycle.

5. The resource sensing method of claim 1, wherein before the determining whether the current sensing occasion fully overlaps with the ON duration of the current DRX cycle, the method further comprises:

   receiving a first configuration message transmitted from a network-side device, wherein the first configuration message comprises a start location of the target time period; or,
   the start location of the target time period is pre-configured ; or
   before the performing the resource sensing within the target time period within the ON duration of the next DRX cycle, the method further comprises:
determining the start location of the target time period.

6. The resource sensing method of claim 5, wherein the start location of the target time period is same as a start location of the ON duration of the next DRX cycle.

7. The resource sensing method of claim 5, wherein the start location of the target time period is a fixed target position within the ON duration of the next DRX cycle.

8. The resource sensing method of claim 1, wherein for periodic services, a length of the target time period is not less than a maximum sensing cycle in a case that service latency is ensured.

9. The resource sensing method of claim 1, wherein for periodic services, an end position of the target time period does not exceed an end position of the ON duration of the next DRX cycle in a case that service latency is not ensured.

10. The resource sensing method of claim 1, wherein for aperiodic services, an end position of the target time period does not exceed an end position of the ON duration of the next DRX cycle.

11. A resource sensing method, applied to a network-side device, comprising:
   transmitting a first configuration message to a target user equipment, UE, wherein the first configuration message comprises a start location of a target time period, the target time period is a time period within which the target UE performs, when a current sensing occasion does not fully overlap with an ON duration of a current discontinuous reception, DRX, cycle, resource sensing within an ON duration of a next DRX cycle.

12. The resource sensing method of claim 11, wherein the current sensing occasion does not fully overlap with the ON duration of the current DRX cycle comprises:
   a part of the current sensing occasion overlaps with the ON duration of the current DRX cycle, and a remaining part of the current sensing occasion overlaps with an OFF duration of the DRX cycle.

13. The resource sensing method of claim 11, wherein the current sensing occasion does not fully overlap with the ON duration of the current DRX cycle comprises:
   the current sensing occasion fully overlaps with an OFF duration of the current DRX cycle.

**14.** The resource sensing method of claim 11, wherein the current sensing occasion does not fully overlap with the ON duration of the current DRX cycle comprises:
a part of the current sensing occasion overlaps with an OFF duration of the current DRX cycle, and a remaining part of the current sensing occasion overlaps with the ON duration of the next DRX cycle.

**15.** The resource sensing method of claim 11, wherein a start location of the target time period is same as a start location of the ON duration of the next DRX cycle.

**16.** The resource sensing method of claim 11, wherein a start location of the target time period is a fixed target position within the ON duration of the next DRX cycle.

**17.** The resource sensing method of claim 11, wherein for periodic services, a length of the target time period is not less than a maximum sensing cycle in a case that service latency is ensured.

**18.** The resource sensing method of claim 11, wherein for periodic services, an end position of the target time period does not exceed an end position of the ON duration of the next DRX cycle in a case that service latency is not ensured.

**19.** The resource sensing method of claim 11, wherein for aperiodic services, an end position of the target time period does not exceed an end position of the ON duration of the next DRX cycle.

**20.** A user equipment, UE, comprising: a memory, a transceiver, and a processor;
the memory is used to store computer programs; the transceiver is used to transmit and receive data under a control of the processor; and the computer programs, when executed by the processor, cause the UE to perform following operations:

determining whether a current sensing occasion fully overlaps with an ON duration of a current discontinuous reception, DRX, cycle; and
when the current sensing occasion does not fully overlap with the ON duration of the current DRX cycle, performing resource sensing within a target time period within an ON duration of a next DRX cycle.

**21.** The UE of claim 20, wherein the current sensing occasion does not fully overlap with the ON duration of the current DRX cycle comprises:
a part of the current sensing occasion overlaps with the ON duration of the current DRX cycle, and a remaining part of the current sensing occasion overlaps with an OFF duration of the DRX cycle.

**22.** The UE of claim 20, wherein the current sensing occasion does not fully overlap with the ON duration of the current DRX cycle comprises:
the current sensing occasion fully overlaps with an OFF duration of the current DRX cycle.

**23.** The UE of claim 20, wherein the current sensing occasion does not fully overlap with the ON duration of the current DRX cycle comprises:
a part of the current sensing occasion overlaps with an OFF duration of the current DRX cycle, and a remaining part of the current sensing occasion overlaps with the ON duration of the next DRX cycle.

**24.** The UE of claim 20, wherein before determining whether the current sensing occasion fully overlaps with the ON duration of the current DRX cycle, the operations further comprises:

receiving a first configuration message transmitted from a network-side device, wherein the first configuration message comprises a start location of the target time period; or,
the start location of the target time period is pre-configured; or,
before the performing the resource sensing within the target time period within the ON duration of the next DRX cycle, the operations further comprises:
determining the start location of the target time period.

**25.** The UE of claim 24, wherein the start location of the target time period is same as a start location of the ON duration of the next DRX cycle.

**26.** The UE of claim 24, wherein the start location of the target time period is a fixed target position within the ON duration of the next DRX cycle.

**27.** The UE of claim 20, wherein for periodic services, a length of the target time period is not less than a maximum sensing cycle in a case that service latency is ensured.

**28.** The UE of claim 20, wherein for periodic services, an end position of the target time period does not exceed an end position of the ON duration of the next DRX cycle in a case that service latency is not ensured.

**29.** The UE of claim 20, wherein for aperiodic services, an end position of the target time period does not exceed an end position of the ON duration of the next DRX cycle.

30. A network-side device, comprising a memory, a transceiver, and a processor;

the memory is used to store computer programs; the transceiver is used to transmit and receive data under a control of the processor; the computer programs, when executed by the processor, cause the network-side device to perform following operations: transmitting a first configuration message to a target user equipment, UE, wherein the first configuration message comprises a start location of a target time period, the target time period is a time period within which the target UE performs, when a current sensing occasion does not fully overlap with an ON duration of a current discontinuous reception, DRX, cycle, resource sensing within an ON duration of a next DRX cycle.

31. The network-side device of claim 30, wherein the current sensing occasion does not fully overlap with the ON duration of the current DRX cycle comprises: a part of the current sensing occasion overlaps with the ON duration of the current DRX cycle, and a remaining part of the current sensing occasion overlaps with an OFF duration of the DRX cycle.

32. The network-side device of claim 30, wherein the current sensing occasion does not fully overlap with the ON duration of the current DRX cycle comprises: the current sensing occasion fully overlaps with an OFF duration of the current DRX cycle.

33. The network-side device of claim 30, wherein the current sensing occasion does not fully overlap with the ON duration of the current DRX cycle comprises: a part of the current sensing occasion overlaps with an OFF duration of the current DRX cycle, and a remaining part of the current sensing occasion overlaps with the ON duration of the next DRX cycle.

34. The network-side device of claim 30, wherein a start location of the target time period is same as a start location of the ON duration of the next DRX cycle.

35. The network-side device of claim 30, wherein a start location of the target time period is a fixed target position within the ON duration of the next DRX cycle.

36. The network-side device of claim 30, wherein for periodic services, a length of the target time period is not less than a maximum sensing cycle in a case that service latency is ensured.

37. The network-side device of claim 30, wherein for periodic services, an end position of the target time period does not exceed an end position of the ON duration of the next DRX cycle in a case that service latency is not ensured.

38. The network-side device of claim 30, wherein for aperiodic services, an end position of the target time period does not exceed an end position of the ON duration of the next DRX cycle.

39. A resource sensing apparatus, comprising:

a first determining module, used to determine whether a current sensing occasion fully overlaps with an ON duration of a current discontinuous reception, DRX, cycle; and
a sensing module, used to perform, when the current sensing occasion does not fully overlap with the ON duration of the current DRX cycle, resource sensing within a target time period within an ON duration of a next DRX cycle.

40. The resource sensing apparatus of claim 39, wherein the current sensing occasion does not fully overlap with the ON duration of the current DRX cycle comprises:
a part of the current sensing occasion overlaps with the ON duration of the current DRX cycle, and a remaining part of the current sensing occasion overlaps with an OFF duration of the DRX cycle.

41. The resource sensing apparatus of claim 39, wherein the current sensing occasion does not fully overlap with the ON duration of the current DRX cycle comprises:
the current sensing occasion fully overlaps with an OFF duration of the current DRX cycle.

42. The resource sensing apparatus of claim 39, wherein the current sensing occasion does not fully overlap with the ON duration of the current DRX cycle comprises:
a part of the current sensing occasion overlaps with an OFF duration of the current DRX cycle, and a remaining part of the current sensing occasion overlaps with the ON duration of the next DRX cycle.

43. The resource sensing apparatus of claim 39, further comprising a first receiving module;

wherein the first receiving module is used to receive a first configuration message transmitted from a network-side device before the determine whether the current sensing occasion fully overlaps with the ON duration of the current DRX cycle; the first configuration message comprises a start location of the target time period; or,
the start location of the target time period is pre-configured; or
the apparatus further comprises a second determining module;
the second determining module is used to determine the start location of the target time period before the perform the resource sensing within the target time period within the ON duration of the next DRX cycle.

44. The resource sensing apparatus of claim 43, wherein the start location of the target time period is same as the start location of the ON duration of the next DRX cycle.

45. The resource sensing apparatus of claim 43, wherein the start location of the target time period is a fixed target position within the ON duration of the next DRX cycle.

46. The resource sensing apparatus of claim 39, wherein for periodic services, a length of the target time period is not less than a maximum sensing cycle in a case that service latency is ensured.

47. The resource sensing apparatus of claim 39, wherein for periodic services, an end position of the target time period does not exceed an end position of the ON duration of the next DRX cycle in a case that service latency is not ensured.

48. The resource sensing apparatus of claim 39, wherein for aperiodic services, an end position of the target time period does not exceed an end position of the ON duration of the next DRX cycle.

49. A resource sensing apparatus, comprising:
a first transmitting module, used to transmit a first configuration message to a target user equipment, UE; the first configuration message comprises a start location of a target time period; the target time period is a time period within which the target UE performs, when a current sensing occasion does not fully overlap with an ON duration of a current discontinuous reception, DRX, cycle, resource sensing within an ON duration of a next DRX cycle.

50. The resource sensing apparatus of claim 49, wherein the current sensing occasion does not fully overlap with the ON duration of the current DRX cycle comprises:
a part of the current sensing occasion overlaps with the ON duration of the current DRX cycle, and a remaining part of the current sensing occasion overlaps with an OFF duration of the DRX cycle.

51. The resource sensing apparatus of claim 49, the current sensing occasion does not fully overlap with the ON duration of the current DRX cycle comprises:
the current sensing occasion fully overlaps with an OFF duration of the current DRX cycle.

52. The resource sensing apparatus of claim 49, wherein the current sensing occasion does not fully overlap with the ON duration of the current DRX cycle comprises:
a part of the current sensing occasion overlaps with an OFF duration of the current DRX cycle, and a remaining part of the current sensing occasion overlaps with the ON duration of the next DRX cycle.

53. The resource sensing apparatus of claim 49, wherein a start location of the target time period is same as a start location of the ON duration of the next DRX cycle.

54. The resource sensing apparatus of claim 49, wherein a start location of the target time period is a fixed target position within the ON duration of the next DRX cycle.

55. The resource sensing apparatus of claim 49, wherein for periodic services, a length of the target time period is not less than a maximum sensing cycle in a case that service latency is ensured.

56. The resource sensing apparatus of claim 49, wherein for periodic services, an end position of the target time period does not exceed an end position of the ON duration of the next DRX cycle in a case that service latency is not ensured.

57. The resource sensing apparatus of claim 49, wherein for aperiodic services, an end position of the target time period does not exceed an end position of the ON duration of the next DRX cycle.

58. A processor-readable storage medium, storing a computer program used to cause a processor to execute the method described in any one of the claims 1 to 19.

Higher layer parameter
minNumCandidateSF-r14: Y

Maximum sensing window 1s

100ms

Y

Higher layer parameter gapCandidateSensing-r14
"1100101010"

$t^{SL}_{y-k\times P_{step}}$

FIG. 1

DRX ON duration — DRX OFF duration

DRX cycle

FIG. 2

Determining whether a current sensing occasion fully overlaps with an ON duration of a current discontinuous reception (DRX) cycle — 301

When the current sensing occasion does not fully overlap with the ON duration of the current DRX cycle, performing resource sensing within a target time period within the ON duration of a next DRX cycle — 302

FIG. 3

FIG. 4

Within DRX ON
duration

Sensing occasion for partial
sensing within DRX ON duration

Sensing occasion for partial sensing
within DRX OFF duration

Continuous sensing window added
within DRX ON duration

DRX
ON
duration

DRX
OFF
duration

DRX
ON
duration

(a)

DRX
ON
duration

DRX
OFF
duration

DRX
ON
duration

(b)

DRX
ON
duration

DRX
OFF
duration

DRX
ON
duration

(c)

DRX
ON
duration

DRX
OFF
duration

DRX
ON
duration

(d)

$Y-k*P\_step$

$Y$

$n$

DRX
ON
duration

DRX
OFF
duration

FIG. 5

$Y-k*P\_step$

$Y$

$n$

DRX ON
duration

DRX OFF
duration

FIG. 6

$Y-k*P\_step$

$Y$

$n$

DRX ON duration

DRX OFF duration

FIG. 7

Y-k*P_step · Y

n

FIG. 8

Start

Transmitting a first configuration message to a target user equipment (UE); the first configuration message includes a start location of a target time period; the target time period is a time period within which the target UE performs, when a current sensing occasion does not fully overlap with an ON duration of a current discontinuous reception (DRX) cycle, resource sensing within an ON duration of a next DRX cycle

901

FIG. 9

Processor 1010

Bus interface

Memory 1020

Transceiver 1000

User interface 1030

FIG. 10

1110

Processor

1120

Memory

Bus interface

1100

Transceiver

FIG. 11

1201

First determining module

1202

Sensing module

FIG. 12

1301

First transmitting module

FIG. 13

**INTERNATIONAL SEARCH REPORT**

| International application No. |
|---|
| **PCT/CN2022/080642** |

| A. | CLASSIFICATION OF SUBJECT MATTER |
|---|---|
| | H04W 76/28(2018.01)i;  H04W 74/08(2009.01)i |

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 非连续, 不连续, 感知, 感测, 资源, 部分, 重叠, 持续, 关闭, 下一周期, DRX, sensing, resource, partial, overlap, on, off, next period, cycle

| C. | DOCUMENTS CONSIDERED TO BE RELEVANT |
|---|---|

| Category* | Citation of document, with indication, where appropriate, of the relevant passages | Relevant to claim No. |
|---|---|---|
| A | HUAWEI et al. "Physical layer impacts of sidelink DRX"<br>*3GPP TSG RAN WG1 #102-e, R1-2006402*, 28 August 2020 (2020-08-28),<br>sections 2-4 | 1-58 |
| A | FUJITSU. "Considerations on partial sensing in NR V2X"<br>*3GPP TSG RAN WG1 Meeting #103-E, R1-2007787*, 13 November 2020 (2020-11-13),<br>entire document | 1-58 |
| A | VIVO. "Discussion on Sidelink DRX"<br>*3GPP TSG-RAN WG1 Meeting #103-e, R1-2007690*, 13 November 2020 (2020-11-13),<br>entire document | 1-58 |
| A | MEDIATEK INC. "On SL Resource allocation enhancements"<br>*3GPP TSG-RAN WG2 Meeting #112 electronic, R2-2010333*,<br>30 November 2020 (2020-11-30),<br>entire document | 1-58 |
| A | LG ELECTRONICS. "Discussion on Physical Layer Design Considering Sidelink DRX Operation"<br>*3GPP TSG RAN WG1 #103-e, R1-2007897*, 13 November 2020 (2020-11-13),<br>entire document | 1-58 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 June 2022** | **16 June 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/080642**

| C. | DOCUMENTS CONSIDERED TO BE RELEVANT | |
|---|---|---|
| Category* | Citation of document, with indication, where appropriate, of the relevant passages | Relevant to claim No. |
| A | CN 112272397 A (GOHIGH DATA NETWORKS TECHNOLOGY CO., LTD.) 26 January 2021 (2021-01-26) <br>     entire document | 1-58 |

Form PCT/ISA/210 (second sheet) (January 2015)

**INTERNATIONAL SEARCH REPORT**
Information on patent family members

| International application No. |
| --- |
| **PCT/CN2022/080642** |

| Patent document<br>cited in search report | Publication date<br>(day/month/year) | Patent family member(s) | Publication date<br>(day/month/year) |
| --- | --- | --- | --- |
| CN 112272397 A | 26 January 2021 | None | |

Form PCT/ISA/210 (patent family annex) (January 2015)

**EP 4 319 468 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110362314